# EUROPÄISCHE PATENTSCHRIFT

(11) **EP 0 720 557 B1**
(45) Veröffentlichungstag und Bekanntmachung des Hinweises auf die Patenterteilung: **28.05.1997**
(21) Anmeldenummer: 94925595.4
(22) Anmeldetag: 19.09.1994
(51) Int. Cl.: B62B 3/02

(54) **ROLLMOBIL FÜR PERSONEN- UND/ODER GEPÄCKTRANSPORT**
HAND CART FOR THE TRANSPORT OF PERSONS AND LUGGAGE
VOITURE A BRAS POUR LE TRANSPORT DE PERSONNES ET/OU DE BAGAGES

(30) Priorität: 20.09.1993 CH 2823/93
(43) Veröffentlichungstag der Anmeldung: 10.07.1996
(73) Patentinhaber: Van Ligten, Robert Hermanus, 8044 Zürich (CH)
(72) Erfinder: Van Ligten, Robert Hermanus, 8044 Zürich (CH)
(74) Vertreter: Feldmann, Clarence Paul
(86) Internationale Anmeldenummer: IB9400280
(87) Internationale Veröffentlichungsnummer: WO9508466

(56) Entgegenhaltungen:
- EP-A- 0 294 249
- GB-A- 2 180 801
- US-A- 3 785 669
- US-A- 4 802 681

## Beschreibung

Die vorliegende Erfindung betrifft ein multifunktionelles Rollmobil zum Personen- und/oder Gepäcktransport mit einem als Standfläche dienenden Trittbrett, mindestens zwei bezüglich der Fahrrichtung vorderen Rollen und mindestens einer hinteren Rolle und einem auf dem Trittbrett angeordneten Stütz- und Ziehbügel.

Rollbretter, auch unter dem Namen Skateboards bekannt, werden vorallem von Jugendlichen als Fortbewegungsmittel und Spielzeug verwendet. Sie weisen im allgemeinen je zwei vordere und zwei hintere Rollen auf, wobei jedes Rollenpaar mittels einer beweglichen Radachse verbunden ist. Derartige Rollbretter sind klein und sie sind durch die spezielle Lagerung der Radachsen sehr wendig. Zudem ermöglichen sie eine schnelle Fortbewegung auch auf Gelände mit kleinem Freiraum, auf denen beispielsweise keine Fahrräder mehr einsetzbar wären. Ein Nachteil dieser Rollbretter ist jedoch, dass sie vom Fahrer eine gewisse Geschicklichkeit und Uebung erfordern.

Die Vorteile dieser Rollbretter als Mittel zur allgemeinen Personenbeförderung sind bereits erkannt worden, so dass bereits Rollbretter bekannt sind, die auch von ungeübteren Personen verwendet werden können. So offenbaren beispielsweise US-A-4'274'647 und FR-A-2'467'003 Rollbretter, die eine Lenkstange aufweisen, auf die sich der Fahrer abstützen und mittels der er die Fahrtrichtung bestimmen kann. Der Antrieb des Rollbrettes erfolgt entweder durch eigene Körperkraft, indem ein Fuss am Boden abgestossen wird oder durch Schwerpunktsverlagerung des Fahrers, oder mittels einem am Rollbrett angebrachten Antriebsmotor.

Obwohl dadurch das Rollbrett als allgemein verwendbares Personenbeförderungsmittel einsetzbar ist, weist es noch wesentliche Nachteile auf. Es besteht meistens nämlich das zusätzliche Bedürfnis, gleichzeitig Gepäck zu transportieren. Deshalb werden in Lagerräumen Roller eingesetzt, die analog zu den bekannten zweirädrigen Kinderrollern gestaltet sind und die Trägerflächen zur Beförderung von Gepäck aufweisen. Sie weisen teilweise sogar drei Räder auf, wobei vorne zwei und hinten eines angeordnet ist. Diese Roller sind jedoch relativ gross, unhandlich und bedeutend weniger wendig als die oben beschriebenen Rollbretter.

Des weiteren ist aus DE-A-3'537'522 ein dreirädriger Roller oder Trottinett mit einer Lenkstange bekannt, der einen Gepäcktransport ermöglicht. Dieser Roller weist vorne ein Rad und hinten zwei Räder auf. Die Lenkstange ist an einem Gelenk umklappbar gelagert, so dass sie in vertikaler Stellung als Lenkstange eines Personenbeförderungsmittels dient und in geneigter Stellung als Deichsel eines Gepäck-Handkarrens eingesetzt werden kann, wobei die Trittfläche des Rollers nun als Trägfläche für das Gepäck eingesetzt ist. Zudem kann die Lenkstange vollständig umgeklappt werden, so dass der Roller zusammengefaltet und einfach getragen werden kann.

Dieser Roller ist jedoch in seiner Funktion als Gepäckwagen ebenfalls unhandlich und kann beispielsweise in Fussgängerpassagen oder Einkaufsstrassen kaum verwendet werden.

Es ist deshalb Aufgabe der Erfindung, ein Transportmittel zum Personen und/oder Gepäcktransport zu schaffen, das einfach bedienbar, wendig, handlich zusammenfaltbar und besonders für den Gepäcktransport auch in engen Passagen einsetzbar ist.

Diese Aufgabe löst ein multifunktionelles Rollmobil mit den Merkmalen des Patentanspruches 1.

Weitere vorteilhafte Ausführungsformen gehen aus den abhängigen Patentansprüchen hervor.

Das erfindungsgemässe Rollmobil ist multifunktionell verwendbar, wobei es ebenso wendig ist wie die bekannten Rollbretter.
Einerseits kann es als reines Personentransportmittel eingesetzt werden, wobei der Stützbügel das Lenken des Rollmobiles erleichtert, so dass es auch von ungeübten Fahrern benützt werden kann. In dieser Funktion ist auf dem Trittbrett noch genügend Platz vorhanden, um kleinere Gepäckstücke mitzuführen. In einer bevorzugten Ausführungsform ist auch vor dem Stützbügel eine Tragfläche vorhanden, auf der Gepäckstücke mitgeführt werden können.
Das Rollmobil ist aber auch als reines Gepäcktransportmittel einsetzbar, wobei es zwei verschiedene Formen von Transportmitteln in sich vereint. In der ersten Form bildet die gesamte Trittbrettfläche die Tragfläche für das Gepäck. Das Rollmobil wird vom Benützer leicht um die vordere, dem Stützbügel näherliegende Radachse gekippt, wobei das Gepäck am Stütz- und Ziehbügel angelehnt ist und durch diesen gehalten wird. Das nun als Gepäckkarren eingesetzte Rollmobil kann vom Benützer auf den vorderen Rollen entgegengesetzt zur früheren Fahrrichtung gestossen werden, wobei der Benützer selber zum Fussgänger wird.
Der besondere Vorteil des erfindungsgemässen Rollmobiles liegt aber darin, dass die zweite Form des reinen Gepäcktransportmittels äusserst platzsparend ist und so auch in engen Passagen oder auf Treppen eingesetzt werden kann. Das Rollmobil kann kompakt zusammengefaltet werden, bis es im wesentlichen den bekannten faltbaren, oft mit Einkaufstaschen versehenen Gepäckwagen entspricht. Hierfür wird das Trittbrett zum Stütz- und Ziehbügel hin hochgeklappt, so dass nur noch die zwei vorderen Rollen den Boden berühren. Als Tragfläche für das Gepäck dient in einer bevorzugten Ausführungsform eine vor dem Stütz- und Ziehbügel angeordnete Trägerplatte oder ein nicht hochgeklappter Teil des Trittbrettes.
In beiden Ausführungsformen ist vorgesehen, dass die Trägerplatte beziehungsweise das vollständige Trittbrett bis zur Anlage am Stütz- und Ziehbügel hochgeklappt werden kann, so dass das Rollmobil bei Nichtgebrauch einfach transportiert und platzsparend verstaut werden kann.

Ein weiterer Vorteil des erfindungsgemässen Rollmobiles ist, dass es vollständig zusammengefaltet werden kann, so dass es bei Nichtgebrauch einfach getragen oder platzsparend verstaut werden kann.

In den beiliegenden Zeichnungen ist ein Ausführungsbeispiel des Erfindungsgegenstandes dargestellt und in den nachfolgenden Zeichnungen beschrieben. Es zeigen
- Figur 1: eine perspektivische, schematische Darstellung des erfindungsgemässen multifunktionellen Rollmobiles in der Gebrauchslage als Personentransportmittel;
- Figur 2: eine Ansicht des Rollmobiles von der Seite;
- Figur 3: eine Ansicht des Rollmobiles von der Seite in seiner Gebrauchslage als Gepäck-Transportmittel für grosse Gepäckstücke;
- Figur 4a: eine Ansicht des Rollmobiles von der Seite im teilweise zusammengefalteten Zustand, in einer weiteren Gebrauchslage als Gepäck-Transportmittel;
- Figur 4b: eine Variante des Rollmobiles im teilweise zusammengefalteten Zustand;
- Figur 5: eine Ansicht von der Seite des vollständig zusammengefalteten Rollmobiles und
- Figur 6: eine Ansicht auf die Unterseite des vollständig zusammengefalteten Rollmobiles.

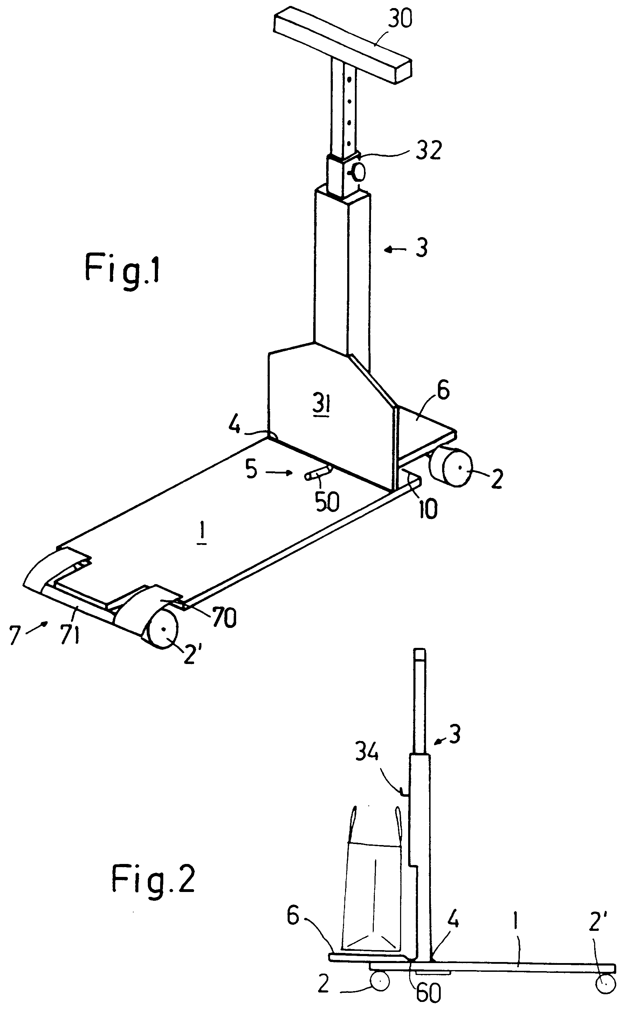

In den Figuren 1 und 2 ist das erfindungsgemässe Rollmobil in seiner Gebrauchslage als Personentransportmittel dargestellt, wobei in dieser Lage gleichzeitig auch Gepäckstücke mittransportiert werden können. Das Rollmobil weist ein Trittbrett 1 auf, das als Standfläche für den Fahrer dient und auf dem gleichzeitig Gepäck befördert werden kann. An der Unterseite des Trittbrettes sind Rollen befestigt, wobei auf der durch die Fahrrichtung vorderen Seite mindestens zwei vordere Rollen 2 und auf der hinteren Seite mindestens eine hintere Rolle 2' vorhanden sind. In diesem Beispiel sind aus Stabilitätsgründen zwei hintere Rollen 2' vorhanden. Die vorderen und hinteren Rollenpaare 2,2' weisen jeweils gemeinsame bewegliche Radachsen 20,20' auf, so dass das Trittbrett 1 und die Rollen 2,2' ein Rollmobil, auch Skateboard genannt, bilden. Das Rollmobil ist somit wie die bekannten Skateboards durch die spezielle Lagerung der Rollen 2,2' durch Verlagerung des Körperschwerpunktes des Fahrers lenkbar und antreibbar. Da das Trittbrett 1 bezüglich den Rollen 2,2' Wippbewegungen ausführt, weist es über den Rollen 2,2' Ausnehmungen auf, so dass die Rollen 2,2' nicht durch das Trittbrett 1 bedeckt sind und somit eventuell behindert werden. Die vorderen Rollen 2 sind mit ihrem äusseren Abmessungen annähernd bündig zur vorderen Kante 10 des Trittbrettes angeordnet oder sie überragen diese.

Das erfindungsgemässe Rollmobil weist eine Bremsvorrichtung 7 auf. Im hinteren Bereich des Trittbrettes 1 ist mindestens ein Bremspedal 70 angeordnet. In diesem Beispiel sind beabstandet über jedem Rad eine flexible Platte als Bremspedal 70 vorgesehen. Beide Platten sind über einen gemeinsamen Steg 71 verbunden, der hinter dem Trittbrett frei hängend angeordnet ist. Dieser Steg 71 geht in ein Bremselement 72 über, das sich frei hängend annähernd mittig unterhalb der hinteren Radachse 20' befindet. Wird nun ein Fersenpedal betätigt, so wird das Bremselement 72, bestehend aus einem Stück Gummi, auf den Boden abgesenkt und bremst das Rollmobil ab. Dabei wirkt es stets in der Mitte unterhalb der hinteren Rollen, unabhängig welches Bremspedal betätigt worden ist. Zudem beeinflusst es nicht die Rollen selber, so dass der Fahrer keine Störung im Gleichgewicht erfährt.

Auf dem Trittbrett 1 ist ein Stütz- und Ziehbügel 3 angeordnet.
In der in den Figuren 1 und 2 dargestellten Gebrauchslage steht der Stütz- und Ziehbügel 3 annähernd senkrecht auf dem Trittbrett 1 auf, wobei er gegenüber dem Trittbrett fixiert ist und in seinem oberen Ende in einen Griff 30 übergeht. In dieser Gebrauchslage dient er als Stütze für den Fahrer, zusätzlich unterstützt er beim Lenken des Rollmobiles die Schwerpunktsverlagerung. In einer bevorzugten Ausführungsform ist der Zieh- und Stützbügel 3 längenverstellbar, so dass die Höhe des Griffes für jeden Fahrer entsprechend eingestellt werden kann.
Obwohl der Begriff Bügel verwendet wird, muss der Stütz- und Ziehbügel nicht unbedingt diese Form aufweisen. Er kann auch wie in den Figuren dargestellt säulenartig ausgebildet sein.
Der untere Teil 31 des Stütz- und Ziehbügels 3 ist flächig ausgebildet und erstreckt sich annähernd über die gesamte Breite des Trittbrettes 1. Bevorzugterweise besteht dieses Teil wie das Trittbrett 1 aus Holz oder einem harten Kunststoff. In dieses flächige Teil 31 ist ein Vierkantrohr 32 verschiebbar gehalten. Dieses Vierkantrohr 32 kann zusätzlich noch teleskopisch ausziehbar sein.

Der Stütz- und Ziehbügel 3 ist über ein erstes Scharnier 4 schwenkbar mit dem Trittbrett 1 verbunden, wobei das Scharnier 4 im vorderen Bereich des Trittbrettes 1 entlang dessen Breite verläuft. Der Stütz- und Ziehbügel 3 ist jedoch in dem in den Figuren 1 und 2 dargestellten, der auseinandergefalteten Position des Rollmobiles entsprechenden, Zustand fixierbar.

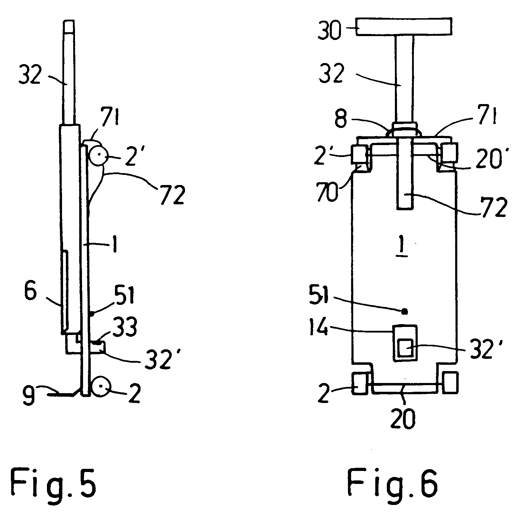

Diese Fixierung ist am besten in den Figuren 5 und 6 ersichtlich. Das Vierkantrohr 32 durchstösst mit seinem unteren Ende 32' das Trittbrett 1, das an dieser Stelle ein Langloch 14 aufweist. Dieses untere Ende 32' ist abgewinkelt, wobei es einen rechten Winkel bildet. Im auseinandergefalteten Zustand des Rollmobiles liegt das abgewinkelte Ende 32' des Vierkantrohres somit an der Unterseite des Trittbrettes 1 an. Am Trittbrett selber sind Arretierungsmittel 5 zur Fixierung des abgewinkelten Endes 32' des Vierkantrohres angebracht. Diese Arretierungsmittel 5 bestehen aus einem Schwenkhebel 50 und einer Schraube 51 mit t-förmigen Kopf, die durch eine hier nicht dargestellte Mutter getrennt in den Schwenkhebel 50 eingeschraubt ist. Der Schwenkhebel 50 befindet sich auf der oberen Seite des Trittbrettes 1, wobei lediglich ein kleiner Betätigungsgriff von der Trittbrettfläche absteht. Die Schraube 50 ragt durch das Trittbrett 1 hindurch und steht auf dessen Unterseite vor. Die Mutter ist ebenfalls auf der Unterseite des Trittbrettes 1 angeordnet. Der t-förmige Kopf der Schraube 51 ragt in einen im abgewinkelten Ende 32' des Vierkantrohres vorhandenen Schlitz 33 hinein. Der Stütz- und Ziehbügel 3 ist in der in den Figuren 1 und 2 dargestellten Gebrauchslage fixiert, wenn mittels dem Schwenkhebel 50 der Schraubenkopf so gedreht wird, dass er quer zum Schlitz 33 liegt, so dass das Vierkantrohr 32 nicht mehr schwenkbar ist. Durch die Mutter wird das untere Ende 32' des Vierkantrohres zugleich an die Unterseite des Trittbrettes 1 gezogen, was die Fixierung verstärkt.

Andere bekannte Vorrichtungen zur Fixierung des recktwinklich vom Trittbrett 1 abstehenden Stütz- und Ziehbügels sind ebenfalls möglich.

Das erfindungsgemässe Rollmobil weist am vorderen Ende und vor dem Stütz- und Ziehbügel 3 eine Trägerplatte 6 auf. Diese ist bevorzugterweise ebenfalls mittels eines zweiten Scharnieres 60 am Trittbrett 1 oder am Stütz- und Ziehbügel 3 schwenkbar befestigt. Diese Trägerplatte 6 dient als Tragfläche für Gepäck oder Waren. Wird das Rollmobil lediglich zum Personentransport verwendet, kann diese Trägerplatte 6 bis zur vollständigen Anlage an den Stütz- und Ziehbügel 3 hochgeschwenkt werden, wobei beide Teile so geformt sein können, dass sie in einer Ebene fluchten.

Am Stütz- und Ziehbügel 3 können für den Transport von weiteren Gepäck, Befestigungsmittel 34, beispielsweise in Form von Haken, angebracht sein.

In der in den Figuren 1 und 2 dargestellten Gebrauchslage kann das Rollmobil somit als reines Personentransportmittel oder als zusätzliches Gepäcktransportmittel eingesetzt werden. Das Rollmobil wird entweder durch Schwerpunktsverlagerungen oder durch Abstossen eines Fusses am Boden durch den Fahrer selber fortbewegt. Das Gepäck kann auf der Trägerplatte oder auf dem Trittbrett selber mittransportiert werden. Dabei dient der flächig ausgebildete Teil des Stütz- und Ziehbügels 3 als Stütze für das Gepäck. Weiteres Gepäck kann an den Befestigungsmitteln des Stütz- und Ziehbügels befestigt werden.

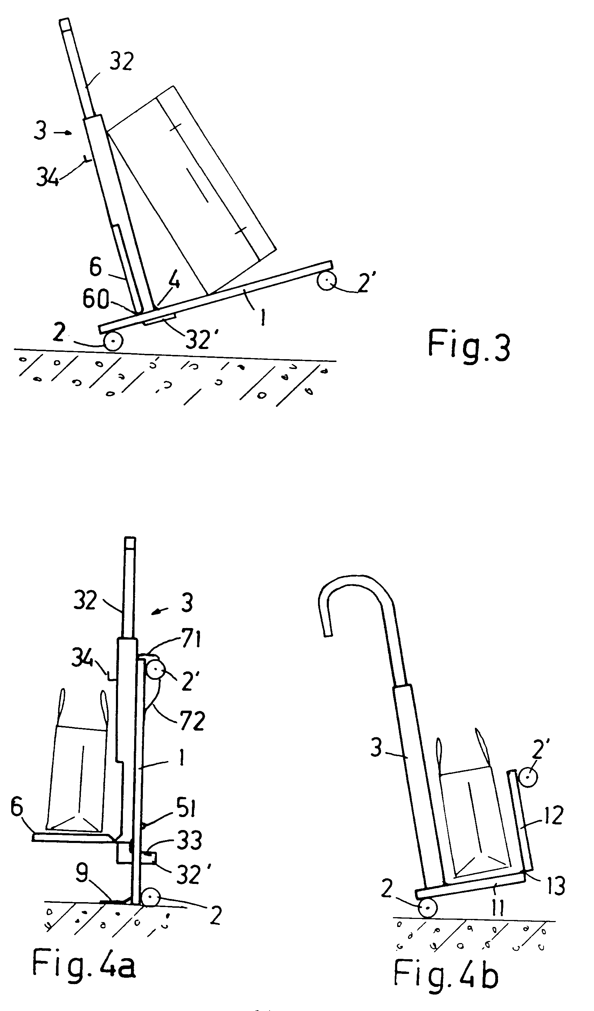

Das erfindungsgemässe Rollmobil lässt sich jedoch auch als reines Gepäckbeförderungsmittel einsetzen. Diese entsprechende Gebrauchslage ist in Figur 3 dargestellt. Das Rollmobil wird nun in entgegengesetzter Richtung gestossen, wobei es vom Benützer in einer leichten Schräglage gehalten wird, so dass es nur noch mit seinen zwei vorderen Rollen 2, die sich jetzt jedoch hinten befinden, auf dem Boden aufliegt. Das Rollmobil wird mittels des gegenüber dem Trittbrett 1 fixierten Stütz- und Ziehbügels 3 gestossen. Als Auflagefläche dient das Trittbrett 1, wobei der Stütz- und Ziehbügel 3 als seitliche Stütze wirkt.

In den Figuren 4a und 4b ist eine weitere Gebrauchslage in zwei verschiedenen Ausführungsformen dargestellt. In Figur 4a ist das Rollmobil in der Ruhestellung abgebildet, in Figur 4b während der Fahrt. Das Rollmobil ist in diesem Zustand teilweise zusammengefaltet und wird nur noch als reines Gepäcktransportmittel eingesetzt.
In Figur 4a ist das gesamte Trittbrett 1 hochgeklappt, so dass es am Stütz- und Ziehbügel 3 anliegt, wobei es in dieser Lage fixiert ist. Die Fixierung kann durch Formschluss erfolgen oder mittels eines Arretierungsmittels. Das so zusammengefaltete Rollmobil liegt nur noch mit seinen vorderen Rollen 2 auf dem Boden auf, wobei sie nicht durch das hochgeklappte Trittbrett 1 behindert werden. Als Trägerfläche für das Gepäck dient die Trägerplatte 6, die annähernd senkrecht zum Stütz- und Ziehbügel verläuft. Der Stütz- und Ziehbügel 3 dient wiederum zum Stossen oder Ziehen dieses kleinen, kompakten Gepäcktransportmittels und als seitliche Stütze für das Gepäck. Damit das Rollmobil auch in dieser teilweise zusammengefalteten Stellung eigenständig steht, ist im Bereich der vorderen Rollen 2 am Trittbrett 1 eine Stütze 9 angebracht. Diese kann beispielsweise ein schwenkbares Winkeleisen sein.
Die in der Figur 4b dargestellte Ausführungsform weist ein faltbares Trittbrett 1 auf. Ein drittes, quer zur Fahrrichtung verlaufendes Scharnier 13 teilt das Trittbrett 1 in zwei Teile.
Der hintere Teil 12 lässt sich gemeinsam mit den hinteren Rollen 2' hochklappen, so dass er eine parallele Fläche zum Stütz- und Ziehbügel 3 bildet. Der vordere Teil 11 des Trittbrettes verbleibt in seiner annähernd horizontalen Lage und dient als Tragfläche für das Gepäck. Das Gepäck wird in diesem Beispiel zweifach seitlich gehalten, durch den hinteren, hochgeklappten Teil 12 des Trittbrettes 1 und durch den Stütz- und Ziehbügel. Auch hier wird das Rollmobil auf seinen vorderen Rollen 2 gezogen oder gestossen. In Figur 4b ist noch eine weitere Ausführungsform gezeigt. Der Stütz- und Ziehbügel 3 weist zwei Griffe auf, von denen jedoch nur einer sichtbar ist. Diese Griffe sind gebogen, so dass sie als Bügel über die Schultern gehängt werden können. Das zusammengefaltete Rollmobil kann somit wie ein Rucksack auf dem Rücken getragen werden. Dies ist vorallem dort sinnvoll, wo längere nicht befahrbare Wegstücke, wie Treppen, zurückgelegt werden müssen.

In den Figuren 5 und 6 ist das erfindungsgemässe Rollmobil im vollständig zusammengefalteten Zustand dargestellt. In diesem Zustand nimmt es sehr wenig Platz ein und kann so einfach getragen oder verstaut werden. Das Trittbrett 1 ist vollständig zum Stütz- und Ziehbügel 3 hochgeklappt, so dass es an diesem anliegt. Es ist wie bereits beschrieben in dieser Lage fixiert gehalten. Das untere abgewinkelte Ende 32' des Vierkantrohres 32 ist dabei so bemessen, dass es nicht über die Rollen 2,2' vorsteht. Die Trägerplatte 6 ist ebenfalls bis zur vollständigen Anlage an den Stütz- und Ziehbügel 3 geschwenkt. Der Stütz- und Ziehbügel 3 und die Trägerplatte 6 sind bevorzugterweise so geformt, dass sie im zusammengefalteten Zustand in einer Ebene fluchten. In einem Beispiel ist die Trägerplatte 6 zweigeteilt und im Bereich des zweiten Scharnieres 60 abgeschrägt, so dass sie im hochgeklappten Zustand den Stütz- und Ziehbügel 3 umschliesst. In einem anderen, hier dargestellten Beispiel weist der Stütz- und Ziehbügel 3 eine Ausnehmung den Abmessungen der Trägerplatte entsprechend auf.
Das vollständig zusammengefaltete Rollmobil steht wiederum auf seinen vorderen Rollen 2' auf dem Boden auf, wobei die Stütze 9 ein eigenständiges Stehen im vollständig zusammengefalteten Zustand ermöglicht. Zudem ist im Bereich der hinteren Rollen 2' ein Traggriff 8 an der Unterseite des Trittbrettes angebracht, so dass das zusammengefaltete Rollmobil einfach getragen werden kann. Falls die bereits beschriebenen gebogenen Griffe am Stütz- und Ziehbügel angebracht sind, so kann das Rollmobil wiederum auf den Schultern getragen werden. Da die Befestigungsmittel des Stütz- und Ziehbügels zugänglich sind, kann immer noch Gepäck transportiert werden, beispielsweise indem eine Tasche angehängt wird.

Weitere Ausgestaltungsformen sind möglich. So kann in einer weiteren, hier nicht dargestellten Ausführungsform der Stütz- und Ziehbügel auch mit der Radachse der vorderen Rollen gekoppelt sein, so dass er im auseinandergefalteten Zustand nicht mehr eine starre Verbindung mit dem Trittbrett aufweist, sondern als Lenkstange verwendet werden kann.
Das Rollmobil kann auch mit einem externen Antriebsmittel, beispielsweise einem Elektromotor, betrieben werden.

## Patentansprüche

1. Multifunktionelles Rollmobil zum Personen- und/oder Gepäcktransport mit einem als Standfläche dienenden Trittbrett (1), mindestens zwei bezüglich der Fahrrichtung vorderen Rollen (2) und mindestens einer hinteren Rolle (2') und einem auf dem Trittbrett (1) angeordneten Stütz- und Ziehbügel (3), dadurch gekennzeichnet,
dass der Stütz- und Ziehbügel (3) bezüglich des Trittbrettes (1) schwenkbar ist, wobei er in einem teilweise zusammengefalteten Zustand des Rollmobiles mindestens teilweise eine parallele Ebene zum Trittbrett (1) bildet,
dass im teilweise zusammengefalteten Zustand mindestens eine Trägerfläche (11,6) zur Aufnahme von Gepäck vorhanden ist, wobei die mindestens eine Trägerfläche (11,6) mindestens annähernd senkrecht zur Ausdehnungsrichtung des Stütz- und Ziehbügels (3) liegt und
dass die vorderen Rollen (2) annähernd bündig zur vorderen Kante (10) des Trittbrettes (1) angeordnet sind oder diese überragen, so dass das teilweise zusammengefaltete Rollmobil auf den zwei vorderen Rollen (2) fahrbar ist.

2. Rollmobil nach Anspruch 1, dadurch gekennzeichnet, dass vor dem Stütz- und Ziehbügel (3) eine Trägerplatte (6) angeordnet ist, die im teilweise zusammengefalteten Zustand des Rollmobiles die Trägerfläche bildet.

3. Rollmobil nach Anspruch 1, dadurch gekennzeichnet, dass das Trittbrett (1) durch ein quer verlaufendes Scharnier (13) geteilt ist, so dass im teilweise zusammengefalteten Zustand der hintere Teil (12) des Trittbrettes (1) eine parallele Ebene zum Stütz- und Ziehbügel (3) bildet und der vordere Teil (11) die Trägerfläche bildet.

4. Rollmobil nach Anspruch 1, dadurch gekennzeichnet, dass zwei hintere Rollen (2') vorhanden sind und dass je die vorderen und hinteren Rollen (2,2') gemeinsame, bewegliche Radachsen (20,20') aufweisen, so dass sie mittels Neigen des Trittbrettes eine Steuerung des Rollmobiles ermöglichen.

5. Rollmobil nach Anspruch 4, dadurch gekennzeichnet, dass am Trittbrett (1) ein Bremspedal (7) angeordnet ist, das auf ein Bremselement (72) wirkt, welches unterhalb der Mitte der hinteren Radachse (20') angeordnet ist und welches bei Betätigung des Bremspedals (7) auf einen befahrenen Boden wirkt.

6. Rollmobil nach Anspruch 1, dadurch gekennzeichnet, dass der Stütz- und Ziehbügel (3) in einem mindestens annähernd rechten Winkel zum Trittbrett (1) fixierbar und verdrehgesichert ist.

7. Rollmobil nach Anspruch 6, dadurch gekennzeichnet, dass das untere Ende (32') des Stütz- und Ziehbügels (3) rechtwinklig abgewinkelt ist, wobei es das Trittbrett (1) durchstösst und welches im auseinandergefalteten Zustand des Rollmobiles mittels einem Arretierungsmittel (5) verdrehgesichert am Trittbrett (1) fixierbar ist.

8. Rollmobil nach Anspruch 7, dadurch gekennzeichnet, dass das Arretierungsmittel (5) im Trittbrett (1) befestigt ist und aus einer Mutter und einer Schraube (51) mit t-förmigem Kopf besteht, wobei der t-förmige Kopf mit einem im abgewinkelten Ende (32') vorhandenen Schlitz (33) in Eingriff bringbar ist.

9. Rollmobil nach Anspruch 1, dadurch gekennzeichnet, dass der Stütz- und Ziehbügel (3) höhenverstellbar ist.

10. Rollmobil nach Anspruch 1, dadurch gekennzeichnet, dass der Stütz- und Ziehbügel (3) mindestens im unteren Bereich flächig ausgebildet ist und sich annähernd über die gesamte Breite des Trittbrettes (1) erstreckt.

11. Rollmobil nach Anspruch 2, dadurch gekennzeichnet, dass es vollständig zusammenfaltbar ist, wobei das gesamte Trittbrett (1) am Stütz- und Ziehbügel (3) anliegt und die Trägerplatte (6) so schwenkbar gehalten ist, dass sie am Stütz- und Ziehbügel anliegt, wobei die einzelnen Teile fixiert in ihrer Lage gehalten sind.

12. Rollmobil nach einem der Ansprüche 1 oder 11, dadurch gekennzeichnet, dass im Bereich der vorderen Rollen (2) am Trittbrett (1) eine Stütze (9) angebracht ist, so dass das Rollmobil mindestens im teilweise zusammengefalteten Zustand eigenständig steht.

## Claims

1. A multifunctional hand cart for the transport of persons and/or luggage having a foot-board (1) serving as a standing surface or base, at least two front rollers (2) with respect to the direction of travel and at least one rear roller (2') and a supporting and pulling yoke (3) located on the foot-board (1), characterised in that the supporting and pulling yoke (3) is pivotable with respect to the foot-board (1) and in a partly folded up state of the hand cart it at least partly lies in a plane parallel with respect to the foot-board (1), that in the partly folded up state there is provided at least one carrying surface (11, 6) for receiving luggage, the at least one carrying surface (11, 6) being at least approximately perpendicular to the direction of the extension of the supporting and pulling yoke (3) and that the front rollers (2) are approximately flush with the front edge (10) of the foot-board (1) or project over the same, so that the partly folded up hand cart can be moved on the two front rollers (2).

2. A hand cart according to claim 1, characterised in that forward of the supporting and pulling yoke (3) is provided a carrying plate (6), which in the partly folded up state of the hand cart forms the carrying surface.

3. A hand cart according to claim 1, characterised in that the foot-board (1) is divided by a transversely directed hinge (13), so that in the partly folded up state the rear part (12) of the foot-board (1) lies in a plane parallel to the supporting and pulling yoke (3) and the front part (11) forms the carrying surface.

4. A hand cart according to claim 1, characterised in that there are two rear rollers (2') and that in each case the front and rear rollers (2, 2') have common, movable wheel axles (20, 20'), so that they allow control of the hand cart by inclining the foot-board.

5. A hand cart according to claim 4, characterised in that on the foot-board (1) is located a brake pedal (7), which acts on a brake element (72), which is positioned below the centre of the rear wheel axle (20') and which on operating the brake pedal (7) acts on the ground or floor over which travelling is taking place.

6. A hand cart according to claim 1, characterised in that the supporting and pulling yoke (3) is fixable and secured against twisting at least approximately at a right angle to the foot-board (1).

7. A hand cart according to claim 6, characterised in that the lower end (32') of the supporting and pulling yoke (3) is bent at right angles, passes through the foot-board (1) and in the folded open state of the hand cart can be fixed so that it cannot twist on the foot-board (1) by means of a locking means (5).

8. A hand cart according to claim 7, characterised in that the locking means (5) is fixed in the foot-board (1) and comprises a nut and a screw (51) with a T-shaped head engageable with a slot (33) present in the bent end (32').

9. A hand cart according to claim 1, characterised in that the supporting and pulling yoke (3) is vertically adjustable.

10. A hand cart according to claim 1, characterised in that the supporting and pulling yoke (3) has a flat construction at least in the lower region and extends approximately over the entire width of the foot-board (1).

11. A hand cart according to claim 2, characterised in that it can be completely folded up, the entire foot-board (1) engaging on the supporting and pulling yoke (3) and the carrying plate (6) being pivotably held in such a way that it engages on the supporting and pulling yoke, the individual parts being kept fixed in position.

12. A hand cart according to one of the claims 1 or 11, characterised in that in the vicinity of the front rollers (2) a support member (9) is fitted to the foot-board (1), so that at least in the partly folded up state the hand cart stands independently.

## Revendications

1. Engin mobile à roulettes à fonctions multiples pour le transport des personnes et/ou des bagages, comprenant une planche pour les pieds (1) qui sert de surface porteuse, au moins deux roulettes (2) situées à l'avant dans la direction de la marche et au moins une roulette (2') située à l'arrière, et un étrier d'appui et de traction (3) disposé sur la planche pour les pieds (1), caractérisé par le fait que l'étrier d'appui et de traction (3) peut pivoter par rapport à la planche pour les pieds (1), et qu'il forme, du moins partiellement, un plan parallèle à la planche pour les pieds (1) dans un état partiellement replié de l'engin mobile à roulettes, par le fait que, dans l'état partiellement replié, au moins une surface porteuse (11, 6) est présente pour recevoir des bagages, la ou les surfaces porteuses (11, 6) étant, du moins approximativement, perpendiculaires à la direction dans laquelle s'étend l'étrier d'appui et de traction (3), et par le fait que les roulettes avant (2) sont disposées approximativement dans l'alignement du bord avant (10) de la planche pour les pieds (1), ou qu'elles font saillie au-delà de celui-ci, de sorte que l'engin mobile à roulettes partiellement replié peut être déplacé sur les deux roulettes avant (2).

2. Engin mobile à roulettes selon la revendication 1, caractérisé par le fait qu'une plaque porteuse (6) est disposée devant l'étrier d'appui et de traction (3), et qu'elle forme la surface porteuse dans l'état partiellement replié de l'engin mobile à roulettes.

3. Engin mobile à roulettes selon la revendication 1, caractérisé par le fait que la planche pour les pieds (1) est divisée par une charnière (13) qui s'étend transversalement, de sorte que, dans l'état partiellement replié, la partie arrière (12) de la planche pour les pieds (1) forme un plan parallèle à l'étrier d'appui et de traction (3) et la partie avant (11) constitue la surface porteuse.

4. Engin mobile à roulettes selon la revendication 1, caractérisé par le fait qu'il est prévu deux roulettes arrière (2'), et par le fait que les roulettes avant et arrière (2, 2') présentent à chaque fois des essieux mobiles communs (20, 20'), de sorte qu'elles permettent de commander l'engin mobile à roulettes en inclinant la planche pour les pieds.

5. Engin mobile à roulettes selon la revendication 4, caractérisé par le fait qu'une pédale de frein (7) est disposée sur la planche pour les pieds (1), et qu'elle agit sur un élément de freinage (72) qui est disposé au-dessous du milieu de l'essieu arrière (20') et qui, lors de l'actionnement de la pédale de frein (7), agit sur le sol sur lequel on circule.

6. Engin mobile à roulettes selon la revendication 1, caractérisé par le fait que l'étrier d'appui et de traction (3) peut être fixé et bloqué en rotation sous un angle par rapport à la planche pour les pieds (1) qui est droit, du moins approximativement.

7. Engin mobile à roulettes selon la revendication 6, caractérisé par le fait que l'extrémité inférieure (32') de l'étrier d'appui et de traction (3) est coudée à angle droit, cependant qu'elle passe à travers la planche pour les pieds (1), et qu'elle peut être fixée à la planche pour les pieds (1) en étant bloquée en rotation à l'aide d'un moyen de blocage (5) dans l'état déplié de l'engin mobile à roulettes.

8. Engin mobile à roulettes selon la revendication 7, caractérisé par le fait que le moyen de blocage (5) est fixé dans la planche pour les pieds (1), et qu'il est constitué par un écrou et par une vis (51) à tête en forme de T, la tête en forme de T pouvant être amenée en prise avec une fente (33) qui est présente dans l'extrémité coudée (32').

9. Engin mobile à roulettes selon la revendication 1, caractérisé par le fait que l'étrier d'appui et de traction (3) peut être réglé en hauteur.

10. Engin mobile à roulettes selon la revendication 1, caractérisé par le fait que l'étrier d'appui et de traction (3) est réalisé sous une forme plate, du moins dans sa région inférieure, et qu'il s'étend approximativement sur toute la largeur de la planche pour les pieds (1).

11. Engin mobile à roulettes selon la revendication 2, caractérisé par le fait qu'il peut être complètement replié, cependant que l'ensemble de la planche pour les pieds (1) porte sur l'étrier d'appui et de traction (3), et que la plaque porteuse (6) est maintenue en pivotement d'une manière telle qu'elle porte sur l'étrier d'appui et de traction et que les divers éléments soient maintenus en étant fixés dans leur position.

12. Engin mobile à roulettes selon l'une des revendications 1 et 11, caractérisé par le fait qu'un appui (9) est monté sur la planche pour les pieds (1) dans la région des roulettes avant (2), de sorte que l'engin mobile à roulettes est stable par lui-même, du moins dans l'état partiellement replié.
